(19) Europäisches Patentamt
European Patent Office
Office européen des brevets

(11) **EP 4 714 922 A1**

(12) **EUROPEAN PATENT APPLICATION**
published in accordance with Art. 153(4) EPC

(43) Date of publication:
**25.03.2026 Bulletin 2026/13**

(21) Application number: **24807150.8**

(22) Date of filing: **10.05.2024**

(51) International Patent Classification (IPC):
$C04B\ 35/50^{(2006.01)}$    $C04B\ 35/44^{(2006.01)}$
$C04B\ 35/64^{(2006.01)}$    $G02B\ 27/28^{(2006.01)}$
$G02F\ 1/09^{(2006.01)}$

(52) Cooperative Patent Classification (CPC):
**C04B 35/44; C04B 35/50; C04B 35/64;
G02B 27/28; G02F 1/09**

(86) International application number:
**PCT/JP2024/017408**

(87) International publication number:
**WO 2024/237198 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.05.2023 JP 2023081620**

(71) Applicant: SHIN-ETSU CHEMICAL CO., LTD.
**Tokyo 1000005 (JP)**

(72) Inventors:
• **IKARI, Masanori
Annaka-shi, Gunma 379-0195 (JP)**
• **MATSUMOTO, Takuto
Annaka-shi, Gunma 379-0195 (JP)**
• **TANAKA, Keita
Annaka-shi, Gunma 379-0195 (JP)**

(74) Representative: **HGF
HGF Limited
4th Floor, 1 City Square
Leeds LS1 2ES (GB)**

Remarks:
The applicant has filed a text with which it is intended to bring the translation into conformity with the application as filed (Art. 14(2) EPC).

(54) **TERBIUM-CONTAINING PARAMAGNETIC GARNET-TYPE TRANSPARENT CERAMIC, PRODUCTION METHOD THEREFOR, RAW-MATERIAL MIXTURE THEREFOR, AND MAGNETO-OPTICAL DEVICE OBTAINED USING SAME AND PRODUCTION METHOD THEREFOR**

(57) Provided is a terbium-including paramagnetic garnet-type transparent ceramic in which a maximum change amount of an incident laser beam diameter can be kept to 10% or less even in a case in which incidence power of laser light having a wavelength of 1064 nm and a beam diameter of 1.6 mm is increased to 160 W. The terbium-including paramagnetic garnet-type transparent ceramic includes a sintered body of a composite oxide represented by Formula (1):

$$(Tb_{1-x-y}Y_xSc_y)_3(Al_{1-z}Sc_z)_5O_{12} \qquad (1)$$

($0.35 \leq x \leq 0.45$, $0 < y < 0.03$, $0.5 < 1-x-y < 0.65$, $0.001 < z < 0.03$, and $0 < y + z < 0.06$), and has a total light transmittance of 84.8% or more at a wavelength of 600 nm. A magneto-optical element is an optical isolator that includes the transparent ceramic as a Faraday rotator 110, includes a polarizer 120 and an analyzer 130 on a front and back side of an optical axis 102 of the Faraday rotator, and is usable in a wavelength band of 0.9 $\mu$m or greater and 1.1 $\mu$m or less.

EP 4 714 922 A1

**(Cont. next page)**

# FIG. 1

**Description**

TECHNICAL FIELD

The present invention relates to a terbium-including paramagnetic garnet-type transparent ceramic, a production method therefor, a raw-material mixture therefor, and a magneto-optical device using the same and a production method therefor, and more particularly, relates to a terbium-including paramagnetic gamet-type transparent ceramic that is suitable for constituting a magneto-optical device such as an optical isolator, a production method therefor, a raw-material mixture therefor, and a magneto-optical device using the same and a production method therefor.

BACKGROUND ART

In recent years, laser processing machines using fiber lasers have been remarkably popular since it has become possible to increase the output. In addition, in a laser light source incorporated in a laser processing machine, in a case in which light from the outside is incident thereon, a phenomenon in which a resonance state becomes unstable and an oscillation state is disturbed occurs. In particular, in a case in which oscillating light is reflected by an optical system in the middle and returned to the light source, the oscillation state undergoes significant disturbance. In order to prevent the disturbance, an optical isolator is usually provided, for example, in front of the light source.

The optical isolator includes a Faraday rotator, a polarizer disposed on a light incident side of the Faraday rotator, and an analyzer disposed on a light emitting side of the Faraday rotator. In addition, the Faraday rotator is used by applying a magnetic field parallel to the traveling direction of light. In this case, a polarization line segment of the light rotates only in a certain direction regardless of whether the light moves forward or backward in the Faraday rotator. Furthermore, the Faraday rotator is adjusted to have a length such that the polarization line segment of the light rotates by just 45 degrees. Here, when polarization planes of the polarizer and the analyzer are deviated by 45 degrees in the rotation direction of the light traveling forward, the polarization of the light traveling forward is transmitted as the polarization aligns with the position of the polarizer and the position of the analyzer. In addition, the polarization of the light traveling backward rotates reversely by 45 degrees with respect to the deviation angle direction of the polarization plane of the polarizer deviated by 45 degrees from the position of the analyzer. In that case, the polarization plane of the return light at the position of the polarizer deviates by 45 degrees - (-45 degrees) = 90 degrees with respect to the polarization plane of the polarizer, and the polarization of the light traveling backward cannot transmit the polarizer. In this way, the optical isolator functions to transmit and emit the light traveling forward, and to block the return light traveling backward.

As a material used as a Faraday rotator constituting the optical isolator, a TGG crystal ($Tb_3Ga_5O_{12}$) and a TSAG crystal (($Tb_{(3-x)}Sc_x)Sc_2Al_3O_{12}$) have been known in the related art (JP 2011-213552 A (Patent Document 1) and JP 2002-293693 A (Patent Document 2)). The TGG crystal is currently widely mounted as a standard fiber laser device. Furthermore, the Verdet constant of the TSAG crystal is considered to be about 1.3 times the Verdet constant of the TGG crystal, and this is also a material that can be mounted on a fiber laser device, but since Sc is an extremely expensive raw material, the adoption has not progressed due to production costs.

In addition to the description above, a TAG crystal ($Tb_3Al_5O_{12}$) has also been known from the past as a Faraday rotator having a Verdet constant greater than that of TSAG. However, since the TAG crystal is a decomposition-melting type crystal, there is a limitation in that the perovskite phase is first generated at the solid-liquid interface, and then the TAG phase is generated. That is, the TAG crystal cannot be grown in a state in which the garnet phase and the perovskite phase are constantly mixed, and the growth of large high-quality TAG crystals has not been realized.

However, in recent years, WO 2018/193848 A (Patent Document 3) discloses a paramagnetic garnet-type transparent ceramic which is a sintered body of a composite oxide represented by the following formula and in which a linear transmittance at a wavelength of 1064 nm with an optical path length of 15 mm is 83% or greater $(Tb_{1-x-y}Sc_xCe_y)_3$ $(Al_{1-z}Sc_z)_5O_{12}$ (in the formula, $0 < x < 0.08$, $0 \le y \le 0.01$, and $0.004 < z < 0.16$).

Furthermore, it has been disclosed that a dense ceramic sintered body having a composition of $(Tb_xY_{1-x})_3Al_5O_{12}$ (x = 0.5 to 1.0) has an extinction ratio (currently 35 dB is improved to 39.5 dB or greater) higher than the existing TGG crystal, and the insertion loss can also be reduced (currently 0.05 dB is improved to 0.01 to 0.05 dB) (Non-Patent Document 1).

Thereafter, JP 2019-199386 A (Patent Document 4) discloses a paramagnetic garnet-type transparent ceramic which is a sintered body of a composite oxide represented by the following formula, includes more than 0% by mass and not more than 0.1% by mass of $SiO_2$ as a sintering aid, and has a linear transmittance of 83.5% or more at a wavelength of 1064 nm with an optical path length of 25 mm $(Tb_{1-x-y}Y_xSc_y)_3(Al_{1-z}Sc_z)_5O_{12}$, in which $0.05 \le x < 0.45$, $0 < y < 0.1$, $0.5 < 1 - x - y < 0.95$, and $0.004 < z < 0.2$.

REFERENCE DOCUMENT LIST

PATENT DOCUMENTS

Patent Document 1: JP 2011-213552 A
Patent Document 2: JP 2002-293693 A
Patent Document 3: WO 2018/193848 A
Patent Document 4: JP 2019-199386 A

NON-PATENT DOCUMENT

Non-Patent Document 1: Yan Lin Aung, Akio Ikesue, "Development of optical grade (TbxY1-x)3Al5O12 ceramics as Faraday rotator material", J. Am. Ceram. Soc., (2017), 100(9), 4081-4087

SUMMARY OF THE INVENTION

PROBLEM TO BE SOLVED BY THE INVENTION

In Patent Document 3, since the linear transmittance is improved to ensure 83% or more even at an optical path length of 15 mm while having a Verdet constant comparable to that of TAG, it can be said that the performance has nearly reached a practical level. However, although not specified in Patent Document 3, the inventors of the present application have found that, in a case in which laser light having a wavelength of 1064 nm is incident on a sample in which the examples of Patent Document 3 are replicated at an output of an incidence power of 100 W after the beam diameter is adjusted to 1.6 mm, a maximum change amount of the incident laser beam diameter due to generation of a thermal lens is greater than 15%.

In addition, the material disclosed in Non-Patent Document 1 is a material in which some Tb ions are substituted with Y ions, and thus, further reduction in loss can be made as compared with the material of Patent Document 3, and an extremely high-quality gamet-type Faraday rotator can be obtained. Specifically, as a result of allowing laser light having a wavelength of 1064 nm to be incident on a sample in which the material described in Non-Patent Document is replicated with an incidence power output of 100 W after adjusting the beam diameter to 1.6 mm, it is found that the maximum change amount of the incident laser beam diameter due to the generation of a thermal lens is less than 10%.

However, the material described in Non-Patent Document 1 has significantly low production reproducibility, and the inventors of the present application have found that, in a case where laser light having a wavelength of 1064 nm is incident on a sample in which the examples of Non-Patent Document are reproduced at an output of an incidence power of 100 W after the beam diameter is adjusted to 1.6 mm, the probability that the maximum change amount of the incident laser beam diameter due to the generation of the thermal lens is greater than 15% is significantly high.

The material disclosed in Patent Document 4 is a material in which some Tb ions are substituted with Y ions similar to Non-Patent Document 1, and thus, a high-quality garnet-type Faraday rotator equivalent to that of Non-Patent Document 1 can be obtained. In a case where laser light having a wavelength of 1064 nm is allowed to be actually incident on a sample, in which the material described in Patent Document 4 is replicated, with an incidence power output of 100 W after adjustment of the laser light to have a beam diameter of 1.6 mm, the maximum change amount of the incident laser beam diameter due to the generation of the thermal lens is less than 10%, which is the same as that in Non-Patent Document 1. Furthermore, the material described in Patent Document 4 has also significantly improved production reproducibility.

Furthermore, in a case in which the incidence power is further increased and laser light is incident on a sample, in which the material described in Patent Document 4 is reproduced, with an incidence power output of 160 W, the maximum change amount of the incident laser beam diameter due to the generation of the thermal lens is greater than 15% in most cases. That is, it can be said that the composite oxide sintered body material for an incidence power of 100 W has reached a practical level, but it still cannot be said that the composite oxide sintered body material for an incidence power of 160 W has reached a practical level.

The present invention has been made in consideration of the above-described circumstances, and an object thereof is to provide a terbium-including paramagnetic garnet-type transparent ceramic in which, in a sintered body of a paramagnetic garnet-type oxide including at least yttrium, terbium, and aluminum as main components and having a content volume molar concentration of terbium greater than or equal to that of yttrium, even in a case in which incidence power of laser light having a wavelength of 1064 nm and a beam diameter of 1.6 mm is increased to 160 W, a maximum change amount of an incident laser beam diameter can be kept to 10% or less, a production method therefor, a raw-material mixture therefor, and a magneto-optical device obtained using the same and a production method therefor.

MEANS FOR SOLVING THE PROBLEM

In order to achieve the above-described object, according to a first aspect of the present invention, there is provided a terbium-including paramagnetic garnet-type transparent ceramic including a sintered body of a composite oxide including terbium, yttrium, scandium, and aluminum, which is represented by Formula (1):

$$(Tb_{1-x-y}Y_xSc_y)_3(Al_{1-z}Sc_z)_5O_{12} \qquad (1)$$

$(0.35 \leqq x \leqq 0.45, 0 < y < 0.03, 0.5 < 1-x-y < 0.65, 0.001 < z < 0.03,$ and $0 < y + z < 0.06)$, in which a total light transmittance at a wavelength of 600 nm is 84.8% or more.

The terbium-including paramagnetic garnet-type transparent ceramic of the present invention may further include more than 0% by mass and not more than 0.1% by mass of $SiO_2$ as a sintering aid.

In the terbium-including paramagnetic garnet-type transparent ceramic of the present invention, both optical end surfaces may be subjected to precision mirror surface polishing processing in a manner that the terbium-including paramagnetic garnet-type transparent ceramic has a length of 14 mm or greater, and an average roughness of each of both optical end surfaces subjected to the polishing processing is in a range of an arithmetic average height $Sa \leqq 0.70$ nm or a root mean square height $Sq \leqq 0.89$ nm.

It is preferable that the paramagnetic garnet-type transparent ceramic of the present invention have a total light transmittance of 84.6% or greater at a wavelength of 540 nm and 85.25% or greater at a wavelength of 1064 nm.

According to a second aspect of the present invention, there is provided a magneto-optical material including: the terbium-including paramagnetic garnet-type transparent ceramic.

According to a third aspect of the present invention, there is provided a magneto-optical device including: the above-described magneto-optical material.

The magneto-optical device of the present invention may be an optical isolator that includes the terbium-including paramagnetic garnet-type transparent ceramic as a Faraday rotator, includes a polarization material on a front and back side of an optical axis of the Faraday rotator, and is usable in a wavelength band of 0.9 $\mu$m or greater and 1.1 $\mu$m or less.

According to a fourth aspect of the present invention, there is provided a production method for a terbium-including paramagnetic garnet-type transparent ceramic including a sintered body of a composite oxide including terbium, yttrium, scandium, and aluminum, which is represented by Formula (1):

$$(Tb_{1-x-y}Y_xSc_y)_3(Al_{1-z}Sc_z)_5O_{12} \qquad (1)$$

$(0.35 \leqq x \leqq 0.45, 0 < y < 0.03, 0.5 < 1-x-y < 0.65, 0.001 < z < 0.03,$ and $0 < y + z < 0.06)$, the production method including the steps of: mixing a terbium oxide and yttrium oxide, or coprecipitated oxide of terbium and yttrium, aluminum oxide, and scandium oxide to prepare a raw-material mixture; performing a calcining treatment or a heating and drying treatment on the raw-material mixture at a heat history of 950°C or lower and molding the mixture to obtain a molded body; degreasing the molded body to obtain a degreased body; first holding the degreased body at a holding temperature of 1000°C or lower during sintering the degreased body under reduced pressure, performing degassing of the degreased body while maintaining a state in which a brown color derived from tetravalent terbium is exhibited by the degreased body, and sintering the degreased body by increasing the temperature to a sintering temperature to obtain a sintered body having a relative sintered density in a range of 93.8% or more and 97.2% or less; performing a hot isostatic pressing (HIP) treatment on the sintered body to further densify the sintered body until the relative sintered density reaches 99.9% or more; performing a decolorizing annealing treatment on the densified sintered body at a temperature lower than a temperature in the HIP treatment to decolorize the brown color derived from the tetravalent terbium exhibited by the densified sintered body; additionally sintering the decolorized sintered body at a temperature higher than any of the sintering temperature and the temperature in the HIP treatment under reduced pressure; and performing an oxidation annealing treatment on the additionally sintered body at a temperature lower than the temperature in the HIP treatment in an oxygen atmosphere or an air atmosphere.

In the raw-material mixture, it is preferable that a ratio of a weight of a residual portion that does not pass through a mesh having an opening of 20 $\mu$m to a total weight of the raw-material mixture be 0.5% or less.

According to a fifth aspect of the present invention, there is provided a raw-material mixture for producing a terbium-including paramagnetic garnet-type transparent ceramic including a sintered body of a composite oxide including terbium, yttrium, scandium, and aluminum which is represented by Formula (1):

$$(Tb_{1-x-y}Y_xSc_y)_3(Al_{1-z}Sc_z)_5O_{12} \qquad (1)$$

$(0.35 \leqq x \leqq 0.45, 0 < y < 0.03, 0.5 < 1-x-y < 0.65, 0.001 < z < 0.03,$ and $0 < y + z < 0.06)$, in which the raw-material mixture is mixed in a state in which each oxide of terbium, yttrium, scandium, and aluminum is not combined, and a ratio of a weight of a residual portion that does not pass through a mesh having an opening of 20 μm to a total weight of the raw-material mixture is 0.5% or less.

According to a sixth aspect of the present invention, there is provided a production method for a magneto-optical device, in which the magneto-optical device includes the paramagnetic garnet-type transparent ceramic obtained by the production method for a paramagnetic garnet-type transparent ceramic.

EFFECTS OF THE INVENTION

According to the present invention, it is possible to provide a terbium-including paramagnetic garnet-type transparent ceramic that is truly transparent and is sufficiently usable for high-power laser applications, in which the maximum change amount of the incident laser beam diameter can be kept to 10% or less even in a case in which high-power laser light such as laser light having a wavelength of 1064 nm, a beam diameter of 1.6 mm, and an incidence power of 160 W is incident, and the shape of the incident beam does not collapse. In addition, it is possible to provide a magneto-optical device, such as a magneto-optical material and an optical isolator, which can be applied to a high-output laser device, and a production method for a magneto-optical device, by using the terbium-including paramagnetic garnet-type transparent ceramic.

BRIEF DESCRIPTION OF THE DRAWINGS

[FIG. 1] This is a schematic cross-sectional view illustrating a configuration example of an optical isolator in which a magneto-optical material according to the present invention is used as a Faraday rotator.
[FIG. 2A] This is a photograph showing an amount of gravel generated in a case in which a raw-material mixture of a terbium-including paramagnetic garnet-type transparent ceramic according to the present invention is subjected to a calcining treatment at 900°C.
[FIG. 2B] This is a photograph showing an amount of gravel generated in a case in which a raw-material mixture of a terbium-including paramagnetic garnet-type transparent ceramic according to the present invention is subjected to a calcining treatment at 950°C.
[FIG. 2C] This is a photograph showing an amount of gravel generated in a case in which a raw-material mixture of a terbium-including paramagnetic garnet-type transparent ceramic according to the present invention is subjected to a calcining treatment at 1000°C.
[FIG. 3A] This is a photograph showing the appearance of a sintered body after a HIP treatment of Example 3.
[FIG. 3B] This is a photograph showing the appearance of the sintered body after a decolorizing annealing treatment of Example 3.
[FIG. 3C] This is a photograph showing the appearance of a sintered body after a HIP treatment of Comparative Example 6.
[FIG. 4] This is a graph showing a total light transmittance of each sintered body after an oxidation annealing treatment in Example 3, Comparative Example 6, and Comparative Example 7.

MODE FOR CARRYING OUT THE INVENTION

[1. Terbium-including paramagnetic garnet-type transparent ceramic]

First, an embodiment of a terbium-including paramagnetic garnet-type transparent ceramic according to the present invention will be described. The terbium-including paramagnetic garnet-type transparent ceramic according to the present embodiment includes a sintered body of a composite oxide including terbium, yttrium, scandium, and aluminum, which is represented by Formula (1):

$$(Tb_{1-x-y}Y_xSc_y)_3(Al_{1-z}Sc_z)_5O_{12} \qquad (1)$$

($0.35 \leqq x \leqq 0.45$, $0 < y < 0.03$, $0.5 < 1-x-y < 0.65$, $0.001 < z < 0.03$, and $0 < y + z < 0.06$), in which a total light transmittance at a wavelength of 600 nm is 84.8% or more.

Since the sintered body has the composition of the composite oxide represented by Formula (1), the beam does not collapse even in a case in which laser light having a wavelength of 1064 nm, a beam diameter of 1.6 mm, and an incidence power of 160 W is incident.

It is preferable that the terbium-including paramagnetic garnet-type transparent ceramic further includes more than 0% by mass and not more than 0.1% by mass of $SiO_2$ as a sintering aid. It is preferable that the amount of $SiO_2$ be in the

above-described range from the viewpoint of the transparency of the sintered body of the paramagnetic garnet-type ceramic to be obtained being improved to a level that can be put to practical use and is stable.

In the present embodiment, it is essential that main components of the 6-coordinate site and the 4-coordinate site in the garnet structure be aluminum (Al). In a case in which the main components of these sites can be formed of aluminum, the binding property of the crystal is improved, and thus, the average value of dn/dt at 30°C $\pm$ 10°C at a wavelength of 1064 nm can be decreased. In a case in which the proportion of the 6-coordinate site and the 4-coordinate site of the aluminum is 1 - z (0.001 < z < 0.03), the average value of dn/dt at 30°C $\pm$ 10°C at a wavelength of 1064 nm can be managed to be 9.0 x $10^{-6}$ $K^{-1}$ or less.

In the present embodiment, terbium (Tb) and yttrium (Y) are selected as main components at the 8-coordinate site, and the concentration of terbium is set to 1 - x - y (0.5 < 1 - x - y < 0.65), and the concentration of yttrium is set to x (0.35 $\leq$ x $\leq$ 0.45). In a case in which the concentration of terbium is in the above-described range, a Verdet constant at a wavelength of 1064 nm is ensured to be 30 rad/(T·m) or greater. Furthermore, in a case in which the concentration of terbium and the concentration of yttrium are set to be in the above-described ranges, the beam does not collapse even in a case in which laser light having a wavelength of 1064 nm, a beam diameter of 1.6 mm, and an incidence power of 160 W is incident. Furthermore, in a case in which these two main components each simultaneously satisfy the above-described ranges, the two characteristics can be simultaneously satisfied.

In the present embodiment, scandium (Sc) is added within the above-described range in Formula (1). In Formula (1), y satisfies 0 < y < 0.03, preferably 0.001 < y < 0.008, and more preferably 0.002 < y < 0.004. In a case in which y is in the above-described ranges, the perovskite-type heterophase can be reduced to a level at which the perovskite-type heterophase is not detected by X-ray diffraction (XRD) analysis. Furthermore, an excessive decrease in thermal conductivity due to the homogeneity of the sintered body or grain boundary scattering can be prevented. Furthermore, in Formula (1), z satisfies 0.001 < z < 0.03 and more preferably 0.002 < z < 0.004. In a case in which z is in the above-described ranges, the perovskite-type heterophase can be reduced to a level at which the perovskite-type heterophase is not detected by X-ray diffraction (XRD) analysis. Furthermore, an excessive decrease in thermal conductivity due to the homogeneity of the sintered body or grain boundary scattering can be prevented. Scandium is added in a range where y is greater than 0 and less than 0.03 and z is greater than 0.001 and less than 0.03, and thus, a highly transparent sintered body can be stably produced.

The terbium-including paramagnetic garnet-type transparent ceramic of the present embodiment includes the above-described components having the composition represented by Formula (1) as main components. Here, "includes ~ as a main component" denotes that the ceramic includes 90% by mass or greater of the composite oxide represented by Formula (1). The content of the composite oxide represented by Formula (1) is preferably 99% by mass or more, more preferably 99.9% by mass or more, still more preferably 99.99% by mass or more, and particularly preferably 99.999% by mass or more.

The terbium-including paramagnetic garnet-type transparent ceramic of the present embodiment is composed of the above-described main component and a sintering aid serving as a sub-component, but may further include other elements. Examples of the other elements include rare earth elements such as lutetium (Lu) and cerium (Ce), and various impurity groups such as sodium (Na), calcium (Ca), magnesium (Mg), phosphorus (P), tungsten (W), and molybdenum (Mo). In a case in which the total amount of Tb and Y is set to 100 parts by mass, the content of the other elements is preferably 10 parts by mass or less, more preferably 0.1 parts by mass or less, and particularly preferably 0.001 parts by mass or less (substantially zero).

The terbium-including paramagnetic garnet-type transparent ceramic of the present embodiment has a total light transmittance of 84.8% or more at a wavelength of 600 nm, which indicates that the oxygen deficiency of the sintered body is extremely small. It has been confirmed that in a case in which oxygen deficiency is present in the sintered body, absorption derived from the oxygen deficiency occurs in the vicinity of a wavelength of 600 nm, and the total light transmittance is less than 84.8%. That is, in a case in which the total light transmittance at a wavelength of 600 nm is 84.8% or more, it means that the absorption derived from oxygen deficiency is minimized, and thus, it indicates that the sintered body is truly transparent and practical, in which the shape of the incident beam does not collapse even in a case in which high-power laser light having a wavelength of 1064 nm, a beam diameter of 1.6 mm, and an incidence power of 160 W is incident.

In the terbium-including paramagnetic garnet-type transparent ceramic of the present embodiment, the total light transmittance thereof is 84.8% or more at a wavelength of 540 nm and preferably 85.3% or more at a wavelength of 1064 nm. This indicates that minute air bubbles of a size of 1 $\mu$m or less, which slightly decrease the total light transmittance at a wavelength of 540 nm, are not present, various defects such as residual distortion which decrease the total light transmittance at a wavelength of 1064 nm are not present, and thus, the sintered body is truly transparent.

The terbium-including paramagnetic garnet-type transparent ceramic of the present embodiment is subjected to a processing treatment of adjusting the length to 14 mm or more, and is used for a desired magneto-optical material. It is preferable that the length be set to 14 mm or more from the viewpoint that incident light in a wavelength band of 0.9 $\mu$m or more and 1.1 $\mu$m or less can rotate by 45 degrees by correct magnetic circuit design even though this depends on the configuration and size of the magnet to be externally attached.

It is preferable that both optical end surfaces of the terbium-including paramagnetic garnet-type transparent ceramic of the present embodiment be optically polished in a manner that the average roughness is in a range of an arithmetic average height Sa ≤ 0.70 nm or a root mean square height Sq ≤ 0.89 nm. It is preferable that the average roughness of both optical end surfaces be in the above-described range from the viewpoint that the laser damage threshold value is 10 J/cm$^2$ or greater even in a case in which a high-power laser is incident. It is preferable that the average roughness thereof be in the above-described range from the viewpoint that unintended scattering loss on the optical surface can be suppressed to a minimum level at the same time.

[2. Production method for terbium-including paramagnetic garnet-type transparent ceramic]

Next, an embodiment of a production method for the terbium-including paramagnetic garnet-type transparent ceramic according to the present invention will be described. The production method of the present embodiment includes the steps of: mixing oxides of terbium, yttrium, aluminum, and scandium to prepare a raw-material mixture; performing a calcining treatment or a heating and drying treatment on the raw-material mixture at a predetermined heat history and molding the mixture to obtain a molded body; degreasing the molded body to obtain a degreased body; first holding the degreased body at a predetermined temperature during sintering of the degreased body under reduced pressure, performing degassing of the degreased body while maintaining a state in which a brown color derived from tetravalent terbium is exhibited by the degreased body, and sintering the degreased body by increasing the temperature to a sintering temperature to obtain a sintered body having a predetermined relative sintered density; performing a hot isostatic pressing (HIP) treatment on the sintered body to further densify the sintered body; performing a decolorizing annealing treatment on the densified sintered body to decolorize a brown color derived from the tetravalent terbium; additionally sintering the decolorized sintered body; and performing an oxidation annealing treatment on the additionally sintered-sintered body. Hereinafter, each step will be described.

[2-1. Preparation step of raw-material mixture]

As a raw material used in the production method of the present embodiment, for example, an oxide powder of each of terbium, yttrium, scandium, and aluminum can be used. The purity of the raw material here is preferably 99.9% by mass or more and particularly preferably 99.99% by mass or more. In addition, as terbium and yttrium, coprecipitated oxides thereof can also be used. Furthermore, a predetermined amount of each raw material is weighed and mixed to have the composition of the composite oxide represented by Formula (1), thereby obtaining a raw-material mixture. In addition, in the present specification, "raw-material mixture" denotes a mixture of oxides of terbium, yttrium, scandium, and aluminum in a state of not being combined.

As a sintering aid, greater than 0% by mass and not greater than 0.1% by mass of silicon oxide (SiO$_2$) may be added to the raw-material mixture. The raw-material mixture is subjected to a mixing treatment using a wet-type ball mill, a bead mill, or a jet mill as appropriate.

Furthermore, among the above-described raw materials, it is preferable that terbium oxide and yttrium oxide or a coprecipitated oxide of terbium and yttrium be subjected to a baking treatment in advance at 1000°C or higher. It is preferable to carry out the baking treatment at 1000°C or higher in advance as described above from the viewpoint of the BET value of each raw material being suppressed to 35 m$^2$/g or less and the ultrafine powder can be prevented from being scattered during handling. In addition, since the adsorbed moisture of the raw material powder can be removed, the accuracy is improved by weighing the raw material subjected to the baking treatment.

It is preferable that the raw-material mixture (in a case in which the oxides of terbium and yttrium are subjected to a baking treatment in advance, a raw-material mixture obtained by mixing the oxides of terbium and yttrium with aluminum oxide and scandium oxide) is subjected to a calcining treatment or a heating and drying treatment. In the raw-material mixture subjected to the calcining treatment or the heating and drying treatment, the heat history is suppressed to preferably 950°C or less, more preferably 920°C or less, and still more preferably 900°C or less. It is preferable that the heat history of the raw-material mixture be managed within the above-described ranges from the viewpoint that the possibility that the rare earth oxide component and the aluminum oxide may react and combine with each other, changing to a monoclinic phase and/or a perovskite phase and/or a garnet phase can be suppressed, and highly active aluminum oxide fine powder can be suppressed from forming granules while undergoing a necking reaction and being aggregated.

In a case in which the heat history of the raw-material mixture is actually managed to be in the above-described range, the amount of the residual portion that does not pass through a mesh having an opening of 20 μm, among gravel, lumps, aggregates, and coarse powder (hereinafter, also simply referred to as "gravel") derived from reaction compounds and necking aggregates can be suppressed to 0.5% or less in terms of the ratio of the weight of the residual portion to the total weight of the raw-material mixture. Furthermore, the lower limit of the heat history in the calcining treatment or the heating and drying treatment of the raw-material mixture is not particularly limited, but may be, for example, 800°C or higher.

In addition, in a case in which the raw-material mixture managed as described above is used, since the abundance of quasi-lump components that barely pass through a mesh having an opening of 20 $\mu$m is also small, and the entire raw-material mixture can be maintained in a fine powder state, the granules granulated by spray drying or the like have properties of being soft, being easy to crush, being smooth, and having high fluidity, and as a result, the filling property and crush resistance during a molding step can be kept in a satisfactory state. In a case in which the filling property and the crush resistance during the molding step are satisfactory, unintended voids are unlikely to be generated inside the molded body, and the overall molding density is likely to be increased. Furthermore, in a case in which such a molded body is added in a sintering step, a highly transparent sintered body in which the number of residual air bubbles is extremely small can be obtained.

Furthermore, in a case in which the raw-material mixture is managed in the above-described state, since the reactivity of the raw-material mixture is also maintained at a high level, densification in the sintering step can be promoted, and homogeneous sintering up to the inside of the sintered body can be carried out. In this manner, a highly transparent, low composition unevenness, high-quality, and heterophase-free sintered body can be obtained.

Various organic additives may be added to the raw-material mixture for the purpose of improving the quality stability and the yield in the subsequent steps. In the present embodiment, the organic additives are not particularly limited, and various dispersants, binders, lubricants, plasticizers, and the like can be suitably used. However, it is preferable to select a type of these organic additives which does not contain unnecessary metal ions and has high purity. In addition, the addition order of each organic additive needs to be appropriately designed so that the management of the properties (particle size distribution and the like) of the raw-material mixture to be produced is not hindered.

[2-2. Molding step]

In the production method of the present embodiment, a typical press molding step can be suitably used. That is, a uniaxial press step of filling a mold and pressurizing the mold in a certain direction, and a cold isostatic pressing (CIP) step or a warm isostatic pressing (WIP) step of sealing and storing a deformable waterproof container and pressurizing the waterproof container with a hydrostatic water pressure, which are most common, can be suitably used. Furthermore, the applied pressure may be appropriately adjusted while confirming the relative density of a molded body to be obtained, and is not particularly limited. For example, it is preferable that the applied pressure be managed to about 300 MPa or less, which can be handled by a commercially available CIP device or WIP device, from the viewpoint of reducing the production cost. Alternatively, a hot press step, a discharge plasma sintering step, a microwave heating step, or the like in which not only a molding step but also sintering are performed simultaneously during molding can be suitably used. Furthermore, a molded body can be prepared by a cast molding method instead of the press molding method. Molding methods such as pressure cast molding, centrifugal cast molding, and extrusion molding can also be employed by optimizing combinations of the shape and size of oxide powder as a raw material and various organic additives. Furthermore, in order to prepare the high-quality terbium-including paramagnetic garnet-type transparent ceramic of the present invention, it is preferable that the applied pressure of the uniaxial press molding be as low as possible within a range in which the molded body does not collapse.

[2-3. Degreasing step]

In the production method of the present embodiment, a typical degreasing step can be suitably used. That is, heating and degreasing can be carried out by a heating furnace. In addition, the kind of gas atmosphere here is not particularly limited, and air, oxygen, hydrogen, and the like can be suitably used. It is preferable that the degreasing temperature be higher than or equal to a temperature at which the organic component of the organic additive to be added can be sufficiently decomposed and removed and that the temperature range is controlled to be lower than or equal to 900°C. It is preferable that the temperature of the degreasing treatment is managed to be in the above-described range from the viewpoint of preventing unintentional thermal shrinkage (a situation in which the densification proceeds while the adsorbed gas is taken in) in an atmosphere that is not a reduced pressure environment due to heating of the degreased body. It is more preferable that the degreasing temperature be controlled to 800°C or less. Furthermore, the lower limit of the degreasing temperature is not particularly limited, but may be, for example, 300°C or more.

[2-4. Sintering step]

In the production method of the present embodiment, the sintering step is a step of, in a case in which the degreased body obtained in the degreasing step is sintered under reduced pressure, temporarily holding the temperature in a temperature range of 1000°C or less in the middle of an increase in temperature, degassing the degreased body in a state in which a brown color derived from the tetravalent terbium oxide remains, and increasing the temperature to the sintering temperature to obtain a sintered body having a relative sintered density of 93.8% or more and 97.2% or less.

The reason the temperature is temporarily held in a temperature range of 1000°C or lower is to thoroughly discharge adsorbed components such as water vapor and nitrogen to the outside of the system before the densification is fully progressed. However, it has been found that, although oxygen gas components that are largely desorbed in a case in which tetravalent Tb among terbium oxide components is changed to trivalent Tb by being heated can be efficiently discharged to the outside of the system by holding the temperature as described above (hereinafter, also referred to as "holding"), oxygen bonded to yttrium oxide is also desorbed at the same time with the discharge, and oxygen deficiency gradually occurs. In addition, it has also been found that in a case in which the tetravalent Tb is completely changed to trivalent Tb, the degree of oxygen deficiency of yttrium oxide also becomes serious along with the change, and the amount of oxygen deficiency of the entire sintered body is increased to such an extent that the appearance exhibits a black color after the subsequent HIP treatment.

Therefore, in a case in which the holding temperature for changing the tetravalent Tb to trivalent Tb is managed to 1000°C or less while the desorption treatment of the adsorbed component is performed, the tetravalent Tb remains slightly, and the sintered body exhibits a light brown color, but the amount of oxygen deficiency in yttrium oxide can be suppressed to an extremely small state. As a result, a sintered body in which the appearance of the sintered body after the subsequent HIP treatment exhibits a light brown color (close to an orange color) without blackness, that is, with extremely low oxygen deficiency, can be obtained.

In addition, in a case in which the holding temperature is set to a temperature higher than 1000°C, a large amount of oxygen deficiency occurs to an extent that the appearance of the sintered body after the subsequent HIP treatment exhibits a black color instead of complete elimination of the light brown color. The lower limit of the holding temperature is not particularly limited as long as the tetravalent Tb can be changed to trivalent Tb at the temperature, but is, for example, preferably 850°C or higher and more preferably 900°C or higher. Furthermore, the holding time during which the temperature is temporarily held at a holding temperature of 1000°C or less and the degassing is performed may be several hours, which is sufficient, but in order to sufficiently perform the degassing from the inside of the degreased body, it is preferable that the holding time be set to 8 hours or longer. The upper limit of the holding time is not particularly limited, but may be, for example, 30 hours or less.

In the sintering step, the temperature is temporarily held at the holding temperature and the degassing is performed as described above, and the temperature is increased to a predetermined sintering temperature. It is essential that the predetermined sintering temperature be set in a temperature range in which only a garnet phase is stably obtained by combining oxides of terbium, yttrium, and scandium with aluminum oxide. It is preferable that the transparent ceramic sintered body be heated to a temperature range in which only the garnet phase is generated as quickly as possible after the degassing process is sufficiently completed from the viewpoint that the generation rate of the unintended heterophase components such as a monoclinic phase and a perovskite phase can be suppressed to a minimum.

For example, the predetermined sintering temperature is preferably 1400°C to 1780°C and particularly preferably 1450°C to 1700°C. It is preferable that the sintering temperature be in the above-described ranges from the viewpoint that densification is promoted while precipitation of heterophases is suppressed, as described above. In addition, the temperature increasing rate from the holding temperature to the sintering temperature is preferably 100°C/hr or more, more preferably 200°C/hr or more, and still more preferably 250°C/hr or more, which is an increase in temperature at a high rate. The upper limit of the temperature increasing rate is not particularly limited, but may be, for example, 300°C/hr or less.

In the sintering step, the relative sintered density of the sintered body to be obtained is managed to be in a range of 93.8% or more and 97.2% or less. The management of the relative sintered density can be carried out by repeatedly performing preliminary experiments several times. It is more preferable to carry out sintering while managing the relative sintered density to be in a range of 93.8% or more and 96.5% or less and still more preferable to carry out sintering while managing the relative sintered density to be in a range of 93.8% or more and 96.0% or less. In a case in which the relative sintered density of the sintered body to be obtained is managed to be in the above-described density ranges, residual air bubbles inside the sintered body can be formed as closed pores. In addition, the sintered particle diameter can be managed without being excessively increased, and thus, the closed pores can be firmly crushed in the subsequent HIP treatment, which is preferable.

In the sintering step, for example, commonly used heating sintering such as a resistance heating method or an induction heating method can be suitably used. The atmosphere here is set as a reduced pressure environment (a vacuum). In a case of carrying out the sintering treatment in a reduced pressure atmosphere, components such as water vapor and nitrogen adsorbed inside the degreased body can be efficiently volatilized and discharged, and oxygen gas that is largely desorbed in a case in which the tetravalent Tb is converted to trivalent Tb by being heated can also be efficiently discharged and volatilized to the outside of the sintered body. The vacuum degree is preferably $1 \times 10^{-3}$ Torr or less. It is preferable that the vacuum degree be controlled to be in the above-described range from the viewpoint that the desorbed gas from the degreased body can be homogeneously and sufficiently discharged to the outside of the system up to the center portion of the sintered body.

[2-5. Hot isostatic pressing (HIP) treatment step]

In the production method of the present embodiment, a hot isostatic pressing (HIP) treatment is performed after the sintering step, and the sintered body is densified until the relative sintered density of the sintered body reaches 99.9% or greater. In a case in which the relative sintered density in the sintering step is appropriately managed, that is, the HIP treatment can be performed in a state in which the sintered particle diameter is not excessively large, the HIP stress is widely and homogeneously transmitted from the outer peripheral portion to the center portion of the sintered body, the closed pores are crushed, and the sintered body is firmly densified. In other words, a substantially ideal sintered body which has no stress unevenness, no unintended void unevenness, and a small amount of remaining air bubbles can be obtained.

In the production method of the present embodiment, conditions are managed in a manner that the sintered body intentionally exhibits a light brown appearance derived from the tetravalent Tb remaining after the HIP treatment. In this manner, the occurrence of oxygen deficiency of yttrium oxide, which is easily reduced, can be suppressed, and thus a terbium-including paramagnetic garnet-type transparent ceramic sintered body having a total light transmittance of 84.8% or greater at a wavelength of 600 nm can be obtained. Furthermore, in a case in which the yttrium oxide has oxygen deficiency, it has been confirmed that absorption derived from the oxygen deficiency occurs in the vicinity of a wavelength of 600 nm, and the total light transmittance is less than 84.8%. In other words, a case in which the total light transmittance at a wavelength of 600 nm is 84.8% or greater indicates that the absorption derived from oxygen deficiency is minimized, and thus, a truly transparent and practical sintered body in which the shape of the incident beam does not collapse even in a case in which high-power laser light having a wavelength of 1064 nm, a beam diameter of 1.6 mm, and an incidence power of 160 W is incident can be obtained.

As the kind of a pressing gas medium used in the HIP treatment, an inert gas such as argon or nitrogen, or $Ar$-$O_2$ can be suitably used. The pressure to be applied by the pressing gas medium is preferably 50 to 300 MPa, and more preferably 100 to 300 MPa. In a case in which the pressure is less than 50 MPa, the effect of improving transparency is not obtained in some cases. Furthermore, in a case in which the pressure is greater than 300 MPa, further improvement of transparency cannot be obtained even in a case in which the pressure is increased, and the load on the device is excessive, which may damage the device. It is preferable that the applied pressure be 196 MPa or less, which is a value that can be treated by a conveniently commercially available HIP device.

The treatment temperature of the HIP treatment is preferably 1100°C to 1780°C and more preferably 1200°C to 1730°C. The heat treatment temperature being higher than 1780°C is not preferable since the risk of oxygen deficiency is increased. In addition, in a case in which the heat treatment temperature is lower than 1100°C, the effect of improving the transparency of the sintered body is hardly obtained. Furthermore, the holding time at the treatment temperature is not particularly limited, but the treatment temperature holding for an extremely long time is not preferable since the risk of oxygen deficiency is increased. Typically, it is preferable that the holding time be set to be in a range of 1 to 3 hours.

The heater material, the heat insulating material, and the treatment container for the HIP treatment are not particularly limited. However, graphite, molybdenum (Mo), tungsten (W), and platinum (Pt) can be suitably used, and yttrium oxide and gadolinium oxide can also be suitably used as the treatment container. In particular, it is preferable that the treatment temperature be 1500°C or less from the viewpoint that platinum can be used as the heater material, the heat insulating material, and the treatment container, and $Ar$-$O_2$ can be used as the pressing gas medium, which can prevent the occurrence of oxygen deficiency during the HIP treatment. In a case in which the treatment temperature is higher than 1500°C, graphite is preferable as the heater material and the heat insulating material. In this case, it is preferable that any of graphite, molybdenum, and tungsten be selected as the treatment container, any of yttrium oxide or gadolinium oxide be selected as a double container inside the treatment container, and the container be filled with an oxygen release material from the viewpoint that the amount of oxygen deficiency occurring during the HIP treatment can be suppressed as much as possible.

[2-6. Decolorizing annealing treatment step]

In the production method of the present embodiment, since the appearance of the sintered body that has been subjected to the HIP treatment is in a state of exhibiting a light brown color, a decolorizing annealing treatment is performed at a treatment temperature lower than or equal to the treatment temperature of the HIP treatment, typically at 1200°C to 1400°C, in an oxygen atmosphere or in an air atmosphere for the purpose of decolorizing and substantially whitening the sintered body. This is because, in a case in which the following additional sintering treatment is performed without performing this step, a large amount of air bubbles remains in the sintered body. In the sintered body that has been subjected to the decolorizing annealing treatment, the oxygen deficiency derived from yttrium oxide is suppressed to a minimum while excess oxygen derived from tetravalent terbium is discharged to the outside of the system, and thus, a garnet-type oxide sintered body having extremely small defect absorption can be obtained.

The holding time at the temperature of the decolorizing annealing treatment is not necessarily set to be long, and typically holding at the temperature for 2 hours may be sufficient.

[2-7. Additional sintering step]

In the production method of the present embodiment, after the decolorizing annealing treatment, additional sintering is performed at a temperature higher than the sintering temperature and also higher than the HIP treatment temperature under reduced pressure. However, in a case in which the temperature of the additional sintering is higher than 1780°C, the risk of oxygen deficiency increases, which is not preferable. In this manner, the residual internal distortion and air bubbles can be further thoroughly eliminated. The vacuum degree in the additional sintering step may be the same as that in the sintering step.

It is preferable that the treatment time of the additional sintering be set to 8 hours or longer from the viewpoint that the residual distortion and residual defects inside the sintered body can be restored. The treatment time is still more preferably 10 hours or longer. In a case in which the treatment time of the additional sintering is sufficiently long, the residual distortion and the residual bubbles can be sufficiently and homogeneously removed from the outer peripheral portion to the center portion of the sintered body, which is preferable. In particular, in a case in which the garnet-type transparent oxide ceramic material is used in an environment in which a high-power laser of 160 W or greater is incident, the additional sintering step is an essential step.

[2-8. Oxidation annealing treatment step]

In the production method of the present embodiment, in order to restore oxygen deficiency in the obtained transparent ceramic sintered body, it is preferable to perform an oxidation annealing treatment (oxygen deficiency restoring treatment) at the HIP treatment temperature or lower, typically 1000°C to 1500°C, in an oxygen atmosphere or in an atmosphere after the additional sintering treatment is completed. Furthermore, the oxidation annealing treatment temperature is more preferably 1300°C or more and 1450°C or less. In this manner, even in a case of a sintered body in which oxygen deficiency is accumulated by the sintering, the HIP treatment, the additional sintering, or the like, oxygen deficiency can be restored, and a terbium-including paramagnetic garnet-type transparent ceramic, which is colorless and transparent and has no defect absorption, can be obtained.

The treatment time of the oxidation annealing treatment is preferably 8 hours or more, more preferably 20 hours or more, and still more preferably 30 hours or more. In a case in which the treatment time of the oxidation annealing treatment is sufficiently long, even oxygen deficiency remaining particularly in the center portion of the sintered body can be sufficiently restored.

[2-9. Optical polishing step]

In the production method of the present embodiment, it is preferable that both end surfaces on the optical axis of the terbium-including paramagnetic garnet-type transparent ceramic obtained by performing the above-described series of steps are optically polished. In this case, the optical surface accuracy is preferably $\lambda/2$ or less and is particularly preferably $\lambda/8$ or less at a measurement wavelength $\lambda$ of 633 nm. Furthermore, the average roughness of the both optical end surfaces here is preferably 0.70 nm or less in terms of the arithmetic average height Sa and 0.89 nm or less in terms of the root mean square height Sq and particularly preferably Sa $\leq$ 0.55 nm and Sq $\leq$ 0.70 nm, respectively. In addition, optical loss can be further reduced by appropriately forming an antireflection film (AR coating film) on the optically polished surface as described above.

As described above, a terbium-including paramagnetic garnet-type transparent ceramic that includes a sintered body of a composite oxide including terbium, yttrium, scandium, and aluminum which is represented by Formula (1) and has a total light transmittance of 84.8% or more at a wavelength of 600 nm can be produced. In addition, the total light transmittance can be achieved at a high value of 84.8% or more at a wavelength of 540 nm and 85.3% or more at a wavelength of 1064 nm by preparing a terbium-including paramagnetic garnet-type transparent ceramic in the above-described production conditions. This suggests that minute air bubbles of a size of 1 $\mu$m or less, which slightly decrease the total light transmittance at a wavelength of 540 nm, are not present, various defects such as residual distortion which decrease the total light transmittance at a wavelength of 1064 nm are not present, and thus, a truly transparent sintered body is obtained. In a case in which the total light transmittance can be managed to be in the above-described ranges, a truly transparent sintered body in which the shape of the incident beam does not collapse even in a case in which high-power laser light having a wavelength of 1064 nm, a beam diameter of 1.6 mm, and an incidence power of 160 W is incident.

[3. Magneto-optical material, magneto-optical device, and production method therefor]

Furthermore, an embodiment of a magneto-optical material, a magneto-optical device, and a production method therefor according to the present invention will be described. The magneto-optical material of the present embodiment includes the terbium-including paramagnetic garnet-type transparent ceramic described above. In addition, the magneto-optical device of the present embodiment is configured by using the terbium-including paramagnetic garnet-type transparent ceramic described above. Specifically, it is preferable that a magneto-optical device be configured and used by applying a magnetic field in parallel with the optical axis of the terbium-including paramagnetic garnet-type transparent ceramic and setting a polarizer and an analyzer in a manner such that the optical axes thereof are shifted from each other by 45 degrees. In particular, the terbium-including paramagnetic garnet-type transparent ceramic is suitably used as a Faraday rotator of an optical isolator having a wavelength of 0.9 to 1.1 $\mu$m as a magneto-optical device.

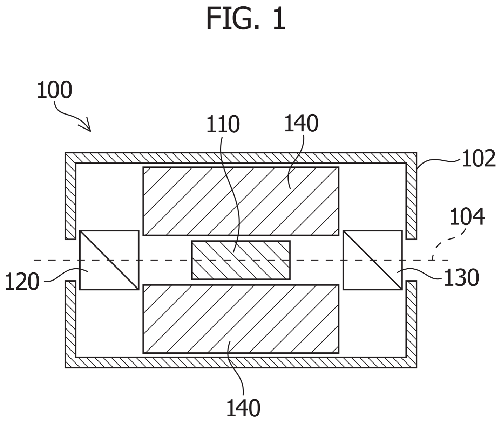

FIG. 1 is a cross-sectional view schematically illustrating an example of an optical isolator which is a magneto-optical device including a Faraday rotator formed of a paramagnetic garnet-type transparent ceramic as an optical element according to the present embodiment. As illustrated in FIG. 1, an optical isolator 100 includes a Faraday rotator 110 formed of the above-described paramagnetic garnet-type transparent ceramic, and a polarizer 120 and an analyzer 130 formed of a polarization material inside a housing 102. These are disposed in the order of the polarizer 120, the Faraday rotator 110, and the analyzer 130 along an optical axis 104 of the Faraday rotator. A polarizing vibration surface of the polarizer 120 and a polarizing vibration surface of the analyzer 130 are disposed in a manner that a relative angle is 45°. In addition, the optical isolator 100 includes a magnet 140 for applying a magnetic field to the Faraday rotator 110, specifically to at least one of the side surfaces of the Faraday rotator 110 in the housing 102.

Such an optical isolator 100 can be suitably used for an industrial fiber laser device (not illustrated). The optical isolator can prevent reflected light of the laser light emitted from a laser light source from being returned to the light source and making the oscillation unstable. Examples

Hereinafter, the present invention will be described in more detail with reference to examples and comparative examples, but the present invention is not limited to the following examples.

[Examples 1 and 2 and Comparative Examples 1 to 8]

A terbium oxide powder, a yttrium oxide powder, and a scandium oxide powder (manufactured by Shin-Etsu Chemical Co., Ltd.), and an aluminum oxide powder (manufactured by Taimei Chemicals Co., Ltd.) were obtained. Furthermore, a liquid of tetraethyl orthosilicate (TEOS) (manufactured by Kishida Chemical Co., Ltd.) was obtained. The purity was 99.95% by mass or more for all the powder raw materials and 99.999% by mass or more for the liquid raw materials.

Composite oxide raw materials having two kinds of final compositions listed in Table 1 were prepared by adjusting the mixing ratio using the above-described raw materials. As a method of adjusting the mixing ratio, each oxide powder was weighed and mixed so that the molar numbers of terbium, yttrium, aluminum, and scandium reached the molar ratios of the respective compositions in Table 1. Subsequently, TEOS was weighed and added to each raw material so that the addition amount thereof reached the value in units of % by mass in terms of $SiO_2$ listed in Table 1.

[Table 1]

| Table 1: Composition of composite oxide and addition amount of sintering aid | | |
|---|---|---|
| | Composition of composite oxide | Sintering aid (% by mass in terms of $SiO_2$) |
| Composition 1 | $(Tb_{0.628}Y_{0.37}Sc_{0.002})_3(Al_{0.998}Sc_{0.002})_5O_{12}$ | 0.01 |
| Composition 2 | $(Tb_{0.598}Y_{0.4}Sc_{0.002})_3(Al_{0.998}Sc_{0.002})_5O_{12}$ | 0.01 |

Furthermore, each composition was subjected to a dispersing and mixing treatment in ethanol in an alumina ball mill device while taking care to prevent the compositions from being mixed together. The treatment time was set to 15 hours.

Thereafter, each raw-material mixture was dried by performing a spray drying treatment, the raw-material mixture was subjected to a calcining treatment while shaking, the calcining temperature as listed in Table 2, and each sample was subjected to a dispersing and mixing treatment in ethanol in an alumina ball mill device while taking care to prevent the samples from being mixed with each other. The treatment time was set to 20 hours. In this case, the slurry of each raw material after mixing for 20 hours was filtered through a mesh having an opening of 20 $\mu$m, and the ratio of the weight of the residual portion (gravel) remaining on the mesh to the total weight of the raw-material mixture was measured and recorded. The results thereof are collectively listed in Table 2.

[Table 2]

| Table 2: Calcining treatment and proportion of residual portion | | | | |
|---|---|---|---|---|
| | Composition | Calcining temperature (°C) | Proportion of residual portion (wt%) | Uncombined raw material ratio (%) |
| Sample 1 | Composition 1 | 900 | < 0.1 | < 10 |
| Sample 2 | Composition 1 | 950 | 0.5 | < 50 |
| Sample 3 | Composition 1 | 1000 | 1.5 | ≥ 90 |
| Sample 4 | Composition 2 | 900 | < 0.1 | < 10 |
| Sample 5 | Composition 2 | 950 | 0.4 | < 50 |
| Sample 6 | Composition 2 | 1000 | 1.4 | ≥ 90 |

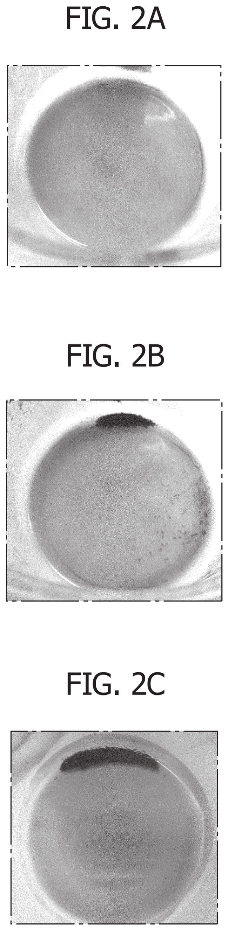

In addition, FIGS. 2A to 2C are photographs showing the amounts of gravel of the samples 1, 2, and 3 remaining after the samples were mixed and pulverized in ethanol for 20 hours after the calcining treatment and allowed to pass through a mesh having an opening of 20 μm.

As shown in FIG. 2C, in a case in which the raw-material mixture was subjected to the calcining treatment at 1000°C, a large amount of coarse gravel that could not pass through a mesh having an opening of 20 μm was generated, and an extremely large amount of coarse powder components that could barely pass through the mesh having an opening of 20 μm were also generated. As a result, the raw material obtained was a raw material powder having large size unevenness and was extremely hard, which was extremely difficult to handle. Naturally, even after the granulation of the raw-material mixture, the variation in hardness of the granules deteriorated, and unevenness in the crushing property was also large. In addition, in a case in which a molded body was prepared using such an inhomogeneous raw material, it was not possible to prevent the occurrence of uneven stress transfer inside the molded body and the occurrence of unintended coarse voids. Then, in a case in which the molded body in such an inhomogeneous state was sintered, stress unevenness, final composition unevenness due to voids, and local internal defects inevitably remained inside the sintered body. In addition, in a case in which the raw-material mixture was subjected to a calcining treatment at 950°C, the amount of gravel was significantly reduced as illustrated in FIG. 2B, and in a case in which the raw-material mixture was subjected to a calcining treatment at 900°C, gravel was hardly found as shown in FIG. 2A.

Thereafter, the obtained six types of samples (oxide raw materials) were subjected to uniaxial press molding and a CIP molding treatment to respectively obtain nine CIP molded bodies. All the obtained molded bodies were subjected to a degreasing treatment in a muffle furnace under conditions of 800°C for 3 hours to obtain a degreased molded body.

Subsequently, among the samples, the samples 1 and 2 and the samples 4 and 5 were divided into three groups respectively having three degreased molded bodies. For the molded bodies of the divided samples 1 to 6, six samples in which the holding temperature was set to 1000°C for 12 hours during an increase in the temperature in the vacuum sintering step were prepared, and three samples in which the temperature was held at 1080°C for 12 hours were prepared. Furthermore, for the six samples in which the temperature was held at 1000°C for 12 hours, a vacuum sintering treatment was performed by adjusting the sintering temperature to be different as listed in Table 3 so that a difference in density after sintering was generated. In addition, for the samples 3 and 6, the holding temperature during an increase in the temperature was fixed at 1000°C for 12 hours, and the sintering treatment was performed at a sintering temperature at which the relative sintered density was in a range of 93.8% or more and 97.2% or less.

[Table 3]

| Table 3: Holding temperature, sintering temperature, and relative sintered density after sintering | | | | |
|---|---|---|---|---|
| | | Holding temperature (°C) | Sintering temperature (°C) | Relative sintered density after sintering (%) |
| Example 1 | Sample 1 | 1000 | 1520 | 96.6 |
| Comparative Example 1 | Sample 1 | 1080 | 1520 | 94.4 |
| Comparative Example 2 | Sample 1 | 1000 | 1590 | 98.9 |
| Example 2 | Sample 2 | 1000 | 1525 | 94.8 |
| Comparative Example 3 | Sample 2 | 1080 | 1525 | 94.1 |
| Comparative Example 4 | Sample 2 | 1000 | 1595 | 99.0 |

(continued)

| Table 3: Holding temperature, sintering temperature, and relative sintered density after sintering | | | | |
|---|---|---|---|---|
| | | Holding temperature (°C) | Sintering temperature (°C) | Relative sintered density after sintering (%) |
| Comparative Example 5 | Sample 3 | 1000 | 1535 | 94.9 |
| Example 3 | Sample 4 | 1000 | 1525 | 93.9 |
| Comparative Example 6 | Sample 4 | 1080 | 1525 | 94.7 |
| Comparative Example 7 | Sample 4 | 1000 | 1595 | 99.1 |
| Example 4 | Sample 5 | 1000 | 1530 | 95.4 |
| Comparative Example 8 | Sample 5 | 1080 | 1530 | 95.0 |
| Comparative Example 9 | Sample 5 | 1000 | 1600 | 99.0 |
| Comparative Example 10 | Sample 6 | 1000 | 1540 | 95.2 |

A HIP furnace made of a carbon heater was charged with each of the obtained sintered bodies, and the sintered bodies were subjected to a HIP treatment under the conditions of 200 MPa and 1600°C for 3 hours in Ar. In all the obtained sintered bodies, the relative density was 99.9% or greater. In addition, the appearance thereof exhibited a light brown color (color derived from tetravalent Tb) at a holding temperature of 1000°C, and exhibited a completely black color (large amount of oxygen deficiency absorption) at a holding temperature of 1080°C.

Therefore, all the samples of Examples 1 to 4 and Comparative Examples 2, 4, 5, 7, 9, and 10, which had an appearance exhibiting a light brown color, were decolorized by being subjected to a decolorizing annealing treatment in an atmospheric heating furnace at 1300°C for 2 hours. The obtained annealed products were all in a transparent or translucent state, that is, in a state in which the products were decolorized.

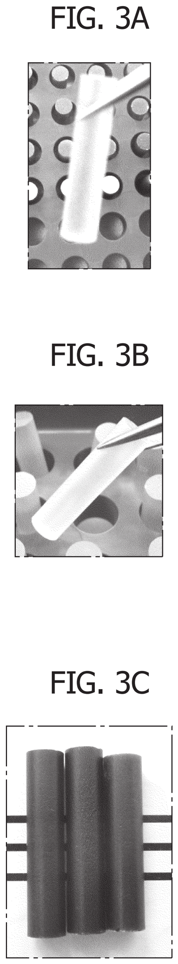

FIG. 3A is a photograph showing the appearance of the sintered body after the HIP treatment of Example 3, and the sintered body exhibited a light brown color. FIG. 3B is a photograph showing the appearance of the sintered body after the decolorizing annealing treatment was further performed at 1300°C for 2 hours in Example 3, and the sintered body was transparent. In contrast, FIG. 3C is a photograph showing the appearance of the sintered body that has been held at a holding temperature of 1080°C for 12 hours, sintered by increasing the temperature to the sintering temperature, and subjected to the HIP treatment in Comparative Example 6, and the sintered body exhibited a black color.

Thereafter, for all samples including the blackened HIP-treated sintered body, the removal of residual air bubbles over the entire region including the center portion of the sintered body was attempted by additional sintering by performing heating at a sintering temperature of 1720°C for 15 hours in a vacuum sintering furnace.

Subsequently, each of the obtained sintered bodies was subjected to an oxidation annealing treatment in an atmospheric heating furnace at 1400°C for 40 hours while managing each lot (the example number and the comparative example number) to sufficiently restore the distortion and the oxygen deficiency. In this manner, a total of 14 types of sintered body sets were prepared, each of which included at least 3 and, in some cases, 9 sintered bodies, in total including examples and comparative examples.

Thereafter, all the obtained sintered body samples were cut and subjected to a precision polishing treatment to have a length of 20 mm, and it was confirmed that both optical end surfaces of all the sintered body samples were processed under conditions of an optical surface accuracy $\lambda/8$ (in a case in which a measurement wavelength $\lambda$ is 633 nm) or greater and an average roughness with an arithmetic average height Sa of 0.70 nm or less and a root mean square height Sq of 0.89 nm or less.

For each of the sintered body samples obtained as described above, the total light transmittance and the forward scattering rate were measured as follows.

(Method for measuring total light transmittance and forward scattering)

The total light transmittance and the forward scattering were measured with reference to JIS K 7105 (ISO 13468-2: 1999) and JIS K 7136 (ISO 14782: 1999). The measurement was carried out at each of wavelengths of 540 nm, 600 nm, 760 nm, 930 nm, and 1064 nm using a spectrophotometer V-670 (manufactured by JASCO Corporation).

First, in the measurement of the total light transmittance, light spectrally separated by a spectroscope without setting a workpiece (sample) in a spectrophotometer V-670 was emitted, the light was received by an integrating sphere set in the device in advance, and the concentrated light was received by a detector. The obtained illuminance was denoted by $I_0$, the workpiece was subsequently set in the device, the spectrally separated light was then incident on the workpiece, and the transmitted light was collected again by the integrating sphere and received by the detector. The obtained illuminance was denoted as I and was determined by the following equation.

$$\text{Total light transmittance (\%/25 mm)} = I/I_0 \times 100$$

Next, in the measurement of forward scattering, light spectrally separated again was incident on the workpiece, and the transmitted light was collected again by the integrating sphere and received by the detector in the same measurement system as the state in which the workpiece was set, except that a reflection plate on a rear surface of the integrating sphere was removed. The obtained illuminance represents a scattering component other than the linear transmission component, and is denoted as $I_S$ and obtained by the following equation. However, since forward scattering is usually almost flat in a visible range and has no wavelength dependence, a value at a wavelength of 1064 nm was recorded as a representative value.

$$\text{Forward scattering rate (\%/25 mm)} = I_S/I_0 \times 100$$

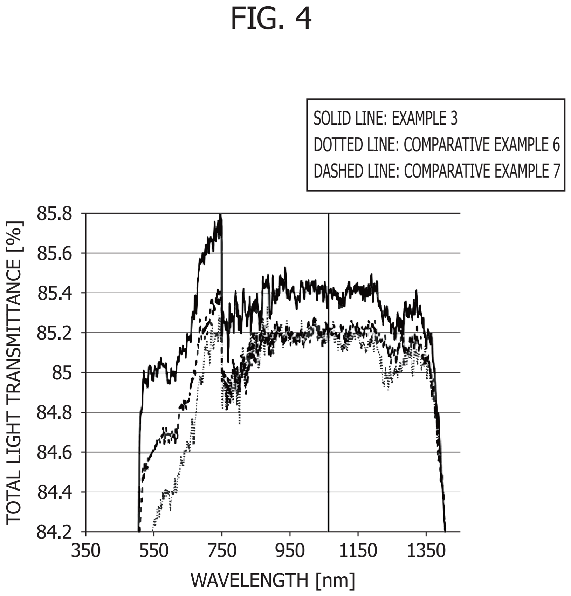

Furthermore, in order to consider the influence of reproducibility or variation, three or nine samples were measured under all the conditions, and the average values thereof were calculated to obtain the total light transmittance and the forward scattering value of each sample. In addition, a beam having a diameter of 2 mmφ was used regardless of the diameter of the sintered body, and the incidence position was adjusted to be substantially the center of the optical effective surface. The results described above are summarized, and the total light transmittances at wavelengths of 540 nm, 600 nm, 760 nm, 930 nm, and 1064 nm and the forward scattering rates at a wavelength of 1064 nm are listed in Table 4. In addition, FIG. 4 shows graphs of the total light transmittances of Example 3, Comparative Example 6, and Comparative Example 7.

[Table 4]

| Table 4: Results of total light transmittance at predetermined wavelength and forward scattering rate | | |
|---|---|---|
| | Total light transmittance at 540 nm, 600 nm, 760 nm, 930 nm, and 1064 nm (%) | Forward scattering (%) |
| Example 1 | 84.6, 84.8, 85.0, 85.3, 85.3 | 0.25 |
| Comparative Example 1 | 84.3, 84.6, 84.9, 84.9, 85.2 | 0.25 |
| Comparative Example 2 | | 0.7 |
| Example 2 | | 0.2 |
| Comparative Example 3 | 84.4, 84.6, 85.0, 85.0, 85.2 | 0.25 |
| Comparative Example 4 | 84.0, 84.3, 84.8, 85.0, 85.1 | 0.8 |
| Comparative Example 5 | 84.1, 84.4, 84.9, 85.1, 85.2 | 0.5 |
| Example 3 | 84.0, 84.4, 84.8, 84.9, 85.1 | 0.15 |
| Comparative Example 6 | 84.7, 84.8, 85.1, 85.2, 85.3 | 0.25 |
| Comparative Example 7 | 84.1, 84.4, 84.9, 85.2, 85.2 | 0.6 |
| Example 4 | 84.7, 84.9, 85.2, 85.4, 85.3 | 0.2 |
| Comparative Example 8 | 84.3, 84.6, 84.9, 85.1, 85.1 | 0.25 |
| Comparative Example 9 | 84.0, 84.3, 84.9, 85.1, 85.2 | 0.7 |
| Comparative Example 10 | 84.1, 84.3, 84.9, 85.2, 85.2 | 0.5 |

As shown in the results listed in Table 4, in the preparation of the composite oxide sintered body of the present invention, it was confirmed that, among groups in which the calcining temperature of the starting raw-material mixture was controlled to 950°C or less, that is, groups in which the uncombined raw material ratio was less than 1/2, a group in which the holding temperature during an increase in the temperature in the sintering step was set to 1000°C and the samples were sintered and subjected to the HIP treatment in a manner that the relative sintered density was less than 98.9% and preferably 97.2% or less, that is, all the samples of Examples 1 to 4, were finished as truly transparent terbium-including paramagnetic garnet-type transparent ceramics, in which the total light transmittance at a wavelength of 600 nm was 84.8% or more, the total light transmittance at a wavelength of 540 nm was 84.6% or more, and the total light transmittance at a wavelength of 1064 nm was 85.25% or more and there was no noticeable absorption in a wide wavelength range.

On the other hand, in the samples of a group (Comparative Examples 5 and 10) in which the calcining temperature of the raw-material mixture was set to 1000°C, the total light transmittance at a wavelength of 600 nm did not reach 84.8%, the total light transmittance at a wavelength of 540 nm did not reach 84.6%, and the total light transmittance at a wavelength of 1064 nm did not reach 85.25%.

In addition, in a group (Comparative Examples 1, 3, 6, and 8) in which the calcining temperature of the raw-material mixture was controlled to 950°C or less, but the holding temperature during an increase in the temperature in the sintering step was set to 1080°C and a group (Comparative Examples 2, 4, 7, and 9) in which the relative sintered density was greater than 97.2%, the total light transmittance at a wavelength of 600 nm did not reach 84.8%, the total light transmittance at a wavelength of 540 nm did not reach 84.6%, and the total light transmittance at a wavelength of 1064 nm did not reach 85.25%.

Finally, in the samples (Comparative Examples 2, 4, 5, 7, 9, and 10) in which the forward scattering was 0.5% or more, the high-power resistance evaluation was abandoned because the scattered light was scattered in four directions and the evaluation became dangerous in a case in which the high-power laser beam with an incidence power of 160 W was incident, and the beam diameter change rate in a case in which the high-power laser beam with an incidence power of 160 W was incident after coating both optical end surfaces with the antireflection film for a wavelength of 1064 nm was evaluated for the eight groups of Examples 1 to 4 and Comparative Examples 1, 3, 6, and 8.

(Evaluation of beam diameter change rate)

In the measurement of the beam diameter change rate, collimated CW laser light (manufactured by IPG Photonics Corporation) having a wavelength of 1070 nm, an emission power of 160 W, and a diameter of 1.6 mm was used, and the beam diameter in a reference plane (entire surface bezel) of the profiler was measured using a ModeMaster PCM$^2$ beam propagation analyzer (manufactured by Coherent Inc.). However, since the emission power after the sample transmission was extremely high, the emission laser light was first attenuated to 1/1000 or less of the intensity by a beam separator and then introduced into a beam profiler. The distance between the reference plane (entire surface bezel) of the beam profiler and the sample holder was 1.9 m, and the distance between the reference plane and the collimator was 2.1 m. First, the beam diameter of the original beam was measured, and the value at this time was denoted by $r_0$. Next, each of the samples having a length of 20 mm was disposed in the optical path, and a beam diameter of transmitted light was measured and denoted as r. In the present invention, the beam diameter change rate was obtained by calculating $|(1 - r/r_0)| \times 100$, and evaluated as acceptable in a case of 10% or less and unacceptable in a case of greater than 10%. The evaluation results are listed in Table 5.

[Table 5]

| Table 5: Evaluation results of beam diameter change rate | |
| --- | --- |
| | Evaluation results of beam diameter change rate in case of incidence of laser at 160 W |
| Example 1 | Acceptable |
| Comparative Example 1 | Unacceptable |
| Example 2 | Acceptable |
| Comparative Example 3 | Unacceptable |
| Example 3 | Acceptable |
| Comparative Example 6 | Unacceptable |
| Example 4 | Acceptable |
| Comparative Example 8 | Unacceptable |

As shown in the results listed in Table 5, in all the groups in the examples in which the total light transmittance at a wavelength of 600 nm was 84.8% or more, the total light transmittance at a wavelength of 540 nm was 84.6% or more, and the total light transmittance at a wavelength of 1064 nm was 85.25% or more, the beam diameter change rate in a case in which a high-power laser beam with an incidence power of 160 W was incident was 10% or less. In contrast, in all the groups of Comparative Examples 1, 3, 6, and 8 in which the values of the total light transmittance did not reach the above-described values, the beam diameter change rate in a case in which a high-power laser beam with an incidence power of 160 W was incident was greater than 10%, which indicated deterioration.

Furthermore, although the present invention has been described based on the above-described embodiments, the present invention is not limited to the embodiments, and changes such as other embodiments, additions, alterations, and deletions can be made within the scope that can be conceived by those skilled in the art, and also fall within the scope of the present invention as long as the actions and effects of the present invention are exhibited in all aspects.

REFERENCE SYMBOL LIST

100   Optical isolator
102   Housing
110   Faraday rotator
120   Polarizer
130   Analyzer
140   Magnet

**Claims**

1. A terbium-including paramagnetic garnet-type transparent ceramic comprising a sintered body of a composite oxide including terbium, yttrium, scandium, and aluminum which is represented by Formula (1):

$$(Tb_{1-x-y}Y_xSc_y)_3(Al_{1-z}Sc_z)_5O_{12} \qquad (1)$$

wherein $0.35 \leq x \leq 0.45$, $0 < y < 0.03$, $0.5 < 1-x-y < 0.65$, $0.001 < z < 0.03$, and $0 < y + z < 0.06$,
wherein a total light transmittance at a wavelength of 600 nm is 84.8% or more.

2. The terbium-including paramagnetic garnet-type transparent ceramic according to claim 1, further comprising $SiO_2$ in an amount greater than 0% by mass and not greater than 0.1% by mass as a sintering aid.

3. The terbium-including paramagnetic garnet-type transparent ceramic according to claim 1 or 2, wherein both optical end surfaces are subjected to precision mirror surface polishing processing in a manner that the terbium-including paramagnetic garnet-type transparent ceramic has a length of 14 mm or more, and an average roughness of each of both optical end surfaces subjected to the polishing processing is in a range of an arithmetic average height $Sa \leq 0.70$ nm or a root mean square height $Sq \leq 0.89$ nm.

4. The terbium-including paramagnetic garnet-type transparent ceramic according to claim 1 or 2, wherein the terbium-including paramagnetic garnet-type transparent ceramic has a total light transmittance of 84.6% or more at a wavelength of 540 nm and 85.25% or more at a wavelength of 1064 nm.

5. A magneto-optical material comprising the terbium-including paramagnetic garnet-type transparent ceramic according to claim 1 or 2.

6. A magneto-optical device comprising the magneto-optical material according to claim 5.

7. The magneto-optical device according to claim 6, wherein the magneto-optical device is an optical isolator that includes the terbium-including paramagnetic garnet-type transparent ceramic as a Faraday rotator, includes a polarization material on a front and back side of an optical axis of the Faraday rotator, and is usable in a wavelength band of 0.9 μm or greater and 1.1 μm or less.

8. A method for producing a terbium-including paramagnetic garnet-type transparent ceramic including a sintered body of a composite oxide including terbium, yttrium, scandium, and aluminum which is represented by Formula (1):

$$(Tb_{1-x-y}Y_xSc_y)_3(Al_{1-z}Sc_z)_5O_{12} \qquad (1)$$

wherein $0.35 \leq x \leq 0.45$, $0 < y < 0.03$, $0.5 < 1-x-y < 0.65$, $0.001 < z < 0.03$, and $0 < y + z < 0.06$,
the production method comprising the steps of:

mixing terbium oxide and yttrium oxide, or a coprecipitated oxide of terbium and yttrium, aluminum oxide, and scandium oxide to prepare a raw-material mixture;

performing a calcining treatment or a heating and drying treatment on the raw-material mixture at a heat history of 950°C or less and molding the mixture to obtain a molded body;

degreasing the molded body to obtain a degreased body;

first holding the degreased body at a holding temperature of 1000°C or less during sintering of the degreased body under reduced pressure, performing degassing of the degreased body while maintaining a state in which a brown color derived from tetravalent terbium is exhibited by the degreased body, and sintering the degreased body by increasing the temperature to a sintering temperature to obtain a sintered body having a relative sintered density in a range of 93.8% or more and 97.2% or less;

performing a hot isostatic pressing (HIP) treatment on the sintered body to further densify the sintered body until the relative sintered density reaches 99.9% or more;

performing a decolorizing annealing treatment on the densified sintered body at a temperature lower than a temperature in the HIP treatment to decolorize the brown color derived from the tetravalent terbium exhibited by the densified sintered body;

additionally sintering the decolorized sintered body at a temperature higher than any of the sintering temperature and the temperature in the HIP treatment under reduced pressure; and

performing an oxidation annealing treatment on the additionally sintered body at a temperature lower than the temperature in the HIP treatment in an oxygen atmosphere or an air atmosphere.

9. The production method for a terbium-including paramagnetic garnet-type transparent ceramic according to claim 8, wherein in the raw-material mixture, a ratio of a weight of a residual portion that does not pass through a mesh having an opening of 20 $\mu$m to a total weight of the raw-material mixture is 0.5% or less.

10. A raw-material mixture for producing a terbium-including paramagnetic garnet-type transparent ceramic including a sintered body of a composite oxide including terbium, yttrium, scandium, and aluminum which is represented by Formula (1):

$$(Tb_{1-x-y}Y_xSc_y)_3(Al_{1-z}Sc_z)_5O_{12} \qquad (1)$$

wherein $0.35 \leqq x \leqq 0.45$, $0 < y < 0.03$, $0.5 < {}_{1-x-y} < 0.65$, $0.001 < z < 0.03$, and $0 < y + z < 0.06$,

wherein the raw-material mixture is mixed in a state in which each oxide of terbium, yttrium, scandium, and aluminum is not combined, and

a ratio of a weight of a residual portion that does not pass through a mesh having an opening of 20 $\mu$m to a total weight of the raw-material mixture is 0.5% or less.

11. A method for producing a magneto-optical device, wherein the magneto-optical device includes the paramagnetic garnet-type transparent ceramic obtained by the production method for a paramagnetic garnet-type transparent ceramic according to claim 8 or 9.

FIG. 1

# FIG. 2A

# FIG. 2B

# FIG. 2C

FIG. 3A

FIG. 3B

FIG. 3C

# FIG. 4

SOLID LINE: EXAMPLE 3
DOTTED LINE: COMPARATIVE EXAMPLE 6
DASHED LINE: COMPARATIVE EXAMPLE 7

## INTERNATIONAL SEARCH REPORT

| International application No. |
| --- |
| **PCT/JP2024/017408** |

| A. | CLASSIFICATION OF SUBJECT MATTER |
| --- | --- |

*C04B 35/50*(2006.01)i; *C04B 35/44*(2006.01)i; *C04B 35/64*(2006.01)i; *G02B 27/28*(2006.01)i; *G02F 1/09*(2006.01)i
FI:   C04B35/50; C04B35/44; G02F1/09 501; G02B27/28 A; C04B35/64

According to International Patent Classification (IPC) or to both national classification and IPC

| B. | FIELDS SEARCHED |
| --- | --- |

Minimum documentation searched (classification system followed by classification symbols)

C04B35/50; C04B35/44; C04B35/64; G02B27/28; G02F1/09

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022/054596 A1 (SHIN-ETSU CHEMICAL CO., LTD.) 17 March 2022 (2022-03-17) paragraphs [0013], [0040], [0042], [0086] | 10 |
| A | entire text, all drawings | 1-9, 11 |
| A | JP 2019-207340 A (SHIN-ETSU CHEMICAL CO., LTD.) 05 December 2019 (2019-12-05) entire text, all drawings | 1-11 |
| A | WO 2022/054515 A1 (SHIN-ETSU CHEMICAL CO., LTD.) 17 March 2022 (2022-03-17) entire text, all drawings | 1-11 |
| A | WO 2011/132668 A1 (FUJIKURA LTD.) 27 October 2011 (2011-10-27) entire text, all drawings | 1-11 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **03 July 2024** | **16 July 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/017408**

| Patent document cited in search report | | | Publication date (day/month/year) | Patent family member(s) | | | Publication date (day/month/year) |
|---|---|---|---|---|---|---|---|
| WO | 2022/054596 | A1 | 17 March 2022 | US 2023/0317325 A1 paragraphs [0028], [0071], [0073], [0122] CN 116113600 A | | | |
| JP | 2019-207340 | A | 05 December 2019 | US 2019/0366584 A1 entire text, all drawings CN 110550946 A | | | |
| WO | 2022/054515 | A1 | 17 March 2022 | US 2023/0335319 A1 entire text, all drawings CN 116171262 A | | | |
| WO | 2011/132668 | A1 | 27 October 2011 | US 2013/0038927 A1 entire text, all drawings CN 102834554 A | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011213552 A
- JP 2002293693 A
- WO 2018193848 A
- JP 2019199386 A

**Non-patent literature cited in the description**

- **YAN LIN AUNG** ; **AKIO IKESUE**. Development of optical grade (TbxY1-x)3Al5O12 ceramics as Faraday rotator material. *J. Am. Ceram. Soc.*, 2017, vol. 100 (9), 4081-4087